# EUROPÄISCHE PATENTSCHRIFT

(11) **EP 0 899 146 B1**
(45) Veröffentlichungstag und Bekanntmachung des Hinweises auf die Patenterteilung: **04.08.2004**
(21) Anmeldenummer: 98115423.0
(22) Anmeldetag: 17.08.1998
(51) Int. Cl.: B60K 26/02, F16H 59/20

(54) **Fahrpedal für ein Kraftfahrzeug**
Accelerator pedal for a motor vehicle
Pédale d'accélérateur pour véhicule à moteur

(30) Priorität: 27.08.1997 DE 19737288
(43) Veröffentlichungstag der Anmeldung: 03.03.1999
(73) Patentinhaber: Siemens Aktiengesellschaft, 80333 München (DE)
(72) Erfinder: Kohlen, Peter, 35510 Butzbach (DE)

(56) Entgegenhaltungen:
- DE-A- 3 128 250
- DE-A- 19 500 666
- DE-C- 19 521 821
- FR-A- 2 725 768

## Beschreibung

Die Erfindung betrifft ein Fahrpedal für ein Kraftfahrzeug mit einem von einem Halteteil gehaltenen, in einer Grundstellung vorgespannten Pedalarm, welcher von einer Betätigungskraft auslenkbar ist, und mit einem zum Betätigen eines elektrischen Schalters ausgebildeten Abstützteil für einen Kick-Down-Anschlag, wobei das Abstützteil an oder in dem Pedalarm beweglich befestigt ist und bei fast durchgetretenem Pedalarm gegen einen Anschlag bewegbar ist und mit seiner Bewegungsrichtung senkrecht auf den Anschlag weisend angeordnet ist.

Ein Fahrpedal der vorstehenden Art ist Gegenstand der FR 2 725 768 A1. Bei dem bekannten Fahrpedal ist am freien Ende des Pedalarmes eine Pedalplatte schwenkbar gelagert. Diese Pedalplatte trägt das Abstützteil, welches sich bei Verschwenkung der Pedalplatte mit dieser verschwenkt und dadurch den elektrischen Schalter betätigt, der am pedalarm befestigt ist.

Solche Fahrpedale werden in heutigen Kraftfahrzeugen mit Automatikgetriebe häufig eingesetzt und sind aus der Praxis bekannt. Der Kick-Down-Anschlag dient dazu, dass der Fahrer bei fast durchgetretenem Pedalarm einen erhöhten Widerstand spürt. Wird der Pedalarm über diesen Kick-Down-Anschlag hinausbewegt, schaltet das Automatikgetriebe in der Regel einen Gang zurück. Das Fahrpedal gemäß der FR 2 725 768 A1 ist sehr aufwändig gestaltet. Durch die verschwenkbare Pedalplatte wird der Schalter über eine Hebelübersetzung betätigt. Hierdurch und durch das erforderliche Gleiten einer Kugel über einen Absatz kommt es zu unterschiedlichen Reibkräften und dadurch zu unterschiedlichen Betätigungskräften des elektrischen Schalters. Weiterhin ist das Fahrpedal insgesamt verschleißanfällig.

Abweichend von der vorgenannten Ausführung gemäß der FR 2 725 768 A1 hat der Pedalarm in der Regel eine nach hinten hervorstehende Nase. Das Abstützteil ist dann als in dem Halteteil befestigtes Federelement ausgebildet, gegen das diese Nase gelangt, wenn der Pedalarm fast durchgetreten wird. Die vorgesehene Widerstandskraft des Kick-Down-Anschlags wird durch die Formgebung der Nase eingestellt.

Nachteilig bei dem bekannten Fahrpedal ist, dass die Widerstandskraft des Kick-Down-Anschlags veränderlich ist. Beispielsweise hat der Pedalarm seitlich ein geringes Spiel, so dass die Nase von dem Federelement an unterschiedlichen Stellen getroffen und deshalb bei jeder Auslenkung des Pedalarms ein anderer Widerstand erzeugt wird. Da das Federelement zudem über die Nase gleitet, unterliegt das Fahrpedal einem Verschleiß, der ebenfalls zu einer Veränderung der Widerstandskraft des Kick-Down-Anschlags führt.

Der Erfindung liegt das Problem zugrunde, ein Fahrpedal der eingangs genannten Art so zu gestalten, dass es einer Betätigungskraft bei fast durchgetretenem Pedalarm auch bei großen Toleranzen und nach längerer Betriebsdauer eine gleichmäßige Widerstandskraft entgegensetzt.

Dieses Problem wird erfindungsgemäß dadurch gelöst, dass das Abstützteil zu dem Anschlag hin vorgespannt und der Anschlag zum Verschieben des Abstützteils relativ zum Pedalarm an einer Grundplatte des Fahrpedals angeordnet ist und das Abstützteil vom Anschlag in der durchgetretenen Stellung des Pedalarmes in eine Ausnehmung des Pedalarmes hineingedrückt wird.

Durch diese Gestaltung wird ein Gleiten des Abstützteils über den Anschlag vermieden. Hierdurch entsteht nahezu kein Verschleiß des Abstützteils oder des Anschlages, so daß das Abstützteil dem fast durchgetretenen Pedalarm über die gesamte Betriebsdauer einen besonders gleichbleibenden Widerstand entgegensetzt. Da dank der Erfindung das Abstützteil am Kick-Down-Anschlag senkrecht zu seiner Bewegungsrichtung belastet wird, ist hierbei der entgegengesetzte Widerstand bei jedem vollständigen Niederdrücken des Pedalarms besonders gleichmäßig. Weiterhin ist das erfindungsgemäße Fahrpedal unempfindlich gegenüber Verschmutzung und Nässe.

Das Abstützteil gestaltet sich gemäß einer vorteilhaften Weiterbildung der Erfindung konstruktiv besonders einfach, wenn das Abstützteil einen von dem Federelement vorgespannten Stößel hat.

Der Stößel könnte beispielsweise von einer Blattfeder in Richtung Anschlag vorgespannt sein. Alternativ dazu könnte der Stößel auf einem Paket Tellerfedern angeordnet sein. Das Abstützteil lässt sich jedoch gemäß einer anderen vorteilhaften Weiterbildung der Erfindung besonders einfach montieren, wenn das Federelement eine Schraubenfeder ist. Ein definierter Verlauf des Widerstandes über den Betätigungsweg lässt sich beispielsweise durch die Wicklungsform der Schraubenfeder erzeugen.

Das Abstützteil gestaltet sich gemäß einer anderen vorteilhaften Weiterbildung der Erfindung besonders kostengünstig, wenn das Abstützteil als aus einem gummielastischen Material gefertigter Block gestaltet ist. Hierbei lässt sich ein vorgesehener Verlauf der Widerstandskraft über den Betätigungsweg beispielsweise durch die Formgebung des Blocks einstellen.

Zur weiteren Verringerung des Verschleißes des erfindungsgemäßen Fahrpedals trägt es bei, wenn das Abstützteil in seinem dem Anschlag zugewandten Bereich eine Verstärkungskappe hat.

Das erfindungsgemäße Fahrpedal hat besonders kleine Abmessungen, wenn der Pedalarm eine Ausnehmung zur Aufnahme des Abstützteils aufweist.

Der Anschlag für das Abstützteil könnte beispielsweise zur Anordnung auf einer Bodenplatte des Kraftfahrzeuges vorgesehen sein. Hierdurch wäre die Position des Kick-Down-Anschlags jedoch abhängig von der Einbaulage des erfindungsgemäßen Fahrpedals. Das erfindungsgemäße Fahrpedal lässt sich jedoch besonders kostengünstig zu einer Einheit vormontieren, wenn der Anschlag auf einer Grundplatte des Halteteils angeordnet ist.

Elektronische Signale zur Ansteuerung einer Steuereinrichtung des Automatikgetriebes lassen sich gemäß einer anderen vorteilhaften Weiterbildung der Erfindung einfach dadurch erzeugen, daß das Abstützteil zur unmittelbaren Betätigung eines elektrischen Schalters ausgebildet ist.

Zur weiteren Verringerung der Abmessungen des erfindungsgemäßen Fahrpedals trägt es bei, wenn der Schalter in der das Abstützteil aufnehmenden Ausnehmung des Pedalarms angeordnet ist.

Der Kick-Down-Anschlag lässt sich gemäß einer anderen vorteilhaften Weiterbildung der Erfindung einfach auf eine vorgesehene Position justieren, wenn die Position des Abstützteils gegenüber dem Fahrpedal in Richtung des Anschlags vorzugsweise stufenlos verstellbar ist. So kann man auch fertigungsbedingte Maßabweichungen ausgleichen.

Die Erfindung lässt zahlreiche Ausführungsformen zu. Zur weiteren Verdeutlichung ihres Grundprinzips sind drei davon in der Zeichnung dargestellt und werden nachfolgend beschrieben. Es zeigen
- Fig. 1: eine schematische Darstellung eines erfindungsgemäßen Fahrpedals,
- Fig. 2: eine weitere Ausführungsform des Abstütz teils für das erfindungsgemäße Fahrpedal,
- Fig. 3: ein aus einem gummielastischen Material gefertigtes Abstützteil.

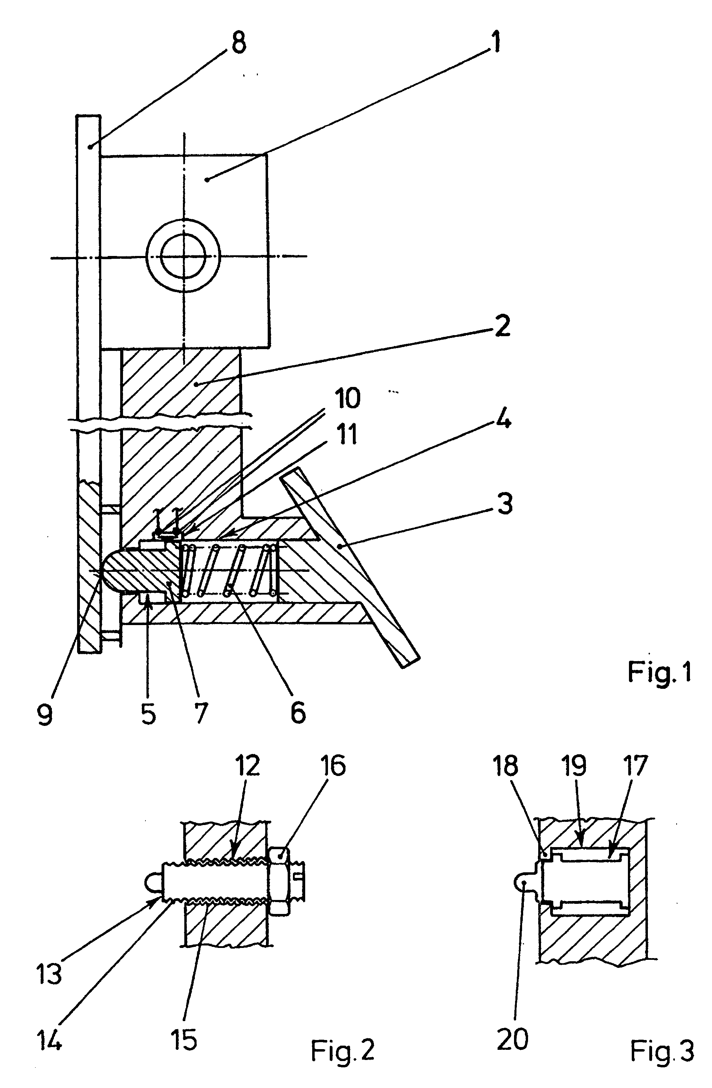

Die **Fig. 1** stellt schematisch ein erfindungsgemäßes Fahrpedal mit einem in einem Halteteil 1 schwenkbar gelagerten Pedalarm 2 in durchgetretener Stellung (Vollaststellung) dar. An seinem dem Halteteil 1 abgewandten Ende hat der Pedalarm 2 eine Pedalplatte 3 zum Niederdrücken des Pedalarms 2. Der Pedalarm 2 hat eine Ausnehmung 4 zum Aufnehmen eines Abstützteils 5 mit einem von einem Federelement 6 vorgespannten Stößel 7. Der Stößel 7 ist in der eingezeichneten durchgetretenen Stellung des Pedalarms 2 von einem auf einer Grundplatte 8 des Halteteils 1 angeordneten Anschlag 9 in die Ausnehmung 4 des Pedalarms 2 hineingedrückt. Hierbei verbindet der Stößel 7 Kontakte 10 eines elektrischen Schalters 11.

Das Abstützteil 5 und der Anschlag 9 bilden einen Kick-Down-Anschlag, welcher bei Kraftfahrzeugen mit Automatikgetrieben bei fast durchgetretenem Pedalarm 2 einem weiteren Niederdrücken eine besonders hohe Widerstandskraft bzw. einen erhöhten Kraftschwellwert entgegensetzt. Nach Überschreiten der Kraftschwelle erhält eine nicht dargestellte Steuerelektronik des Automatikgetriebes von dem elektrischen Schalter 11 ein Signal. In der Regel schaltet das Automatikgetriebe -abhängig von weiteren Parametern wie der Motordrehzahl- anschließend einen Gang zurück.

Die Stellung der Pedalplatte 3 zeigt, daß das erfindungsgemäße Fahrpedal zur hängenden Befestigung in einem Kraftfahrzeug vorgesehen ist. Selbstverständlich kann das erfindungsgemäße Fahrpedal bei einer entsprechenden Stellung der Pedalplatte 3 auch stehend im Kraftfahrzeug montiert werden.

**Fig. 2** zeigt eine weitere Ausführungsform eines in einer Ausnehmung 12 des Pedalarms 2 angeordneten Abstützteils 13. Letzteres hat ein Außengewinde 14 (Gewindehülse), mit dem es in ein Innengewinde 15 der Ausnehmung 12 eingeschraubt ist. Weiterhin ist eine Kontermutter 16 zum Feststellen des Abstützteils 13 an dem Pedalarm 2 aufgeschraubt. Hierdurch läßt sich der Kick-Down-Anschlag bei dem erfindungsgemäßen Fahrpedal stufenlos einstellen. Dies ist insbesondere von Vorteil, wenn der in Figur 1 dargestellte Anschlag 9 für das Abstützteil 13 auf einer nicht dargestellten Bodenplatte des Kraftfahrzeuges angeordnet ist und entsprechende Fertigungs-Maßabweichungen ausgeglichen werden sollen. Die notwendige Elastizität dieser Ausführung des Abstützteils kann z. B. durch einen innerhalb der Gewindehülse gegen Federkraft verschiebbaren Stößel dargestellt werden.

**Fig. 3** zeigt ein aus einem gummielastischen Material als Elastomerblock gefertigtes Abstützteil 17, welches in einer Ausnehmung 19 des Pedalarms 2 angeordnet ist. Diese Ausnehmung 19 weist im Bereich ihrer Öffnung einen umlaufenden Steg 18 auf. An seinem aus der Ausnehmung 19 herausragenden Bereich hat das Abstützteil 17 eine beispielsweise aus Stahl gefertigte Verstärkungskappe 20 zur Verschleißminimierung. Die Ausnehmung 19 hat einen größeren Durchmesser als das Abstützteil 17. Hierdurch kann sich das Abstützteil 17 in der Ausnehmung 19 radial ausdehnen, wenn die Verstärkungskappe 20 gegen den in Figur 1 dargestellten Anschlag 9 gelangt und schließlich nach Überwinden der Kraftschwelle in die Ausnehmung hineingedrückt wird.

Die Ausführungen nach Fig. 2 und 3 lassen sich frei miteinander kombinieren, indem z. B. das Abstützteil 17 aus Fig. 3 mittelbar innerhalb einer Gewindehülse gemäß Fig. 2 im Fahrpedal befestigt und ein Äquivalent zur Ausnehmung 19 innerhalb der Gewindehülse vorgesehen wird.

## Patentansprüche

1. Fahrpedal für ein Kraftfahrzeug mit einem von einem Halteteil (1) gehaltenen, in einer Grundstellung vorgespannten Pedalarm (2), welcher von einer Betätigungskraft auslenkbar ist, und mit einem zum Betätigen eines elektrischen Schalters (11) ausgebildeten Abstützteil (5) für einen Kick-Down-Anschlag, wobei das Abstützteil (5) an oder in dem Pedalarm (2) beweglich befestigt ist und bei fast durchgetretenem Pedalarm (2) gegen einen Anschlag (9) bewegbar ist und mit seiner Bewegungsrichtung senkrecht auf den Anschlag (9) weisend angeordnet ist, **dadurch gekennzeichnet, dass** das Abstützteil (5) zu dem Anschlag (9) hin vorgespannt und der Anschlag (9) zum Verschieben des Abstützteils (5) relativ zum Pedalarm (2) an einer Grundplatte (8) des Fahrpedals angeordnet ist und das Abstützteil (5) vom Anschlag (9) in der durchgetretenen Stellung des Pedalarmes (2) in eine Ausnehmung (4) des Pedalarmes (2) hineingedrückt wird.

2. Fahrpedal nach Anspruch 1, **dadurch gekennzeichnet, daß** das Abstützteil (5, 13) einen von einem Federelement (6) vorgespannten Stößel (7) hat.

3. Fahrpedal nach Anspruch 2, **dadurch gekennzeichnet, daß** das Federelement (6) eine Schraubenfeder ist.

4. Fahrpedal nach zumindest einem der vorhergehenden Ansprüche, **dadurch gekennzeichnet, daß** das Abstützteil (17) als aus einem gummielastischen Material gefertigter Block gestaltet ist.

5. Fahrpedal nach zumindest einem der vorhergehenden Ansprüche, **dadurch gekennzeichnet, daß** das Abstützteil (17) in seinem dem Anschlag (9) zugewandten Bereich eine Verstärkungskappe (20) hat.

6. Fahrpedal nach zumindest einem der vorhergehenden Ansprüche, **dadurch gekennzeichnet, daß** das Abstützteil (5) zum Betätigen eines elektrischen Schalters (11) ausgebildet ist.

7. Fahrpedal nach zumindest einem der vorhergehenden Ansprüche, **dadurch gekennzeichnet, daß** ein elektrischer Schalter (11) in einer das Abstützteil (5) aufnehmenden Ausnehmung (4) des Pedalarms (2) angeordnet ist.

8. Fahrpedal nach zumindest einem der vorhergehenden Ansprüche, **dadurch gekennzeichnet, daß** die Position des Abstützteils (13) gegenüber dem Pedalarm bezüglich des Anschlags (9), insbesondere mittels eines Gewindes, verstellbar ist.

## Claims

1. Accelerator pedal for a motor vehicle, having a pedal arm (2) which is retained by a retaining part (1), is prestressed in a basic position and can be deflected by an actuating force, and having a supporting part (5) which is designed for actuating an electric switch (11) and which is intended for a kick-down stop, wherein the supporting part (5) is fastened in a movable manner on or in the pedal arm (2) and, when the pedal arm (2) has been pressed down virtually to the full extent, can be moved against a stop (9), and is arranged with its direction of movement oriented perpendicularly onto the stop (9), **characterized in that** the supporting part (5) is prestressed in the direction of the stop (9) and the stop (9), for displacement of the supporting part (5) relative to the pedal arm (2), is arranged on a base plate (8) of the accelerator pedal, and the supporting part (5) is pressed into a recess (4) of the pedal arm (2) by the stop (9) in the fully pressed-down position of the pedal arm (2).

2. Acclerator pedal according to Claim 1, **characterized in that** the supporting part (5, 13) has a push rod (7) which is prestressed by a spring element (6).

3. Accelerator pedal according to Claim 2, **characterized in that** the spring element (6) is a helical spring.

4. Accelerator pedal according to at least one of the preceding claims, **characterized in that** the supporting part (17) is configured as a block produced from an elastomeric material.

5. Accelerator pedal according to at least one of the preceding claims, **characterized in that**, in its region which is directed toward the stop (9), the supporting part (17) has a reinforcement cap (20).

6. Accelerator pedal according to at least one of the preceding claims, **characterized in that** the supporting part (5) is designed for actuating an electric switch (11).

7. Accelerator pedal according to at least one of the preceding claims, **characterized in that** an electric switch (11) is arranged in a recess (4) of the pedal arm (2), said recess receiving the supporting part (5).

8. Accelerator pedal according to at least one of the preceding claims, **characterized in that** it is possible to adjust the position of the supporting part (13) in relation to the pedal arm relative to the stop (9), in particular by means of a thread.

## Revendications

1. Pédale d'accélérateur pour véhicule à moteur, comprenant un bras de pédale (2) maintenu par une pièce de maintien (1) et précontraint dans une position de base et qui peut pivoter par une force d'actionnement, et comprenant une pièce d'appui (5) conçue pour actionner un interrupteur électrique (11) pour une butée de kick-down, ladite pièce d'appui (5) fixée mobile sur ou dans le bras de pédale (2) pouvant, lorsque le bras de pédale (2) est presque appuyé à fond, être mue contre une butée (9) et disposée avec son sens de mouvement de manière à être dirigée perpendiculairement à la butée (9), **caractérisée en ce que** la pièce d'appui (5) est précontrainte en direction de la butée (9) et que la butée (9), pour déplacer la pièce d'appui (5) relativement au bras de pédale (2), est disposée sur une plaque de base (8) de la pédale d'accélérateur et **en ce que** la pièce d'appui (5), dans la position où le bras de pédale (2) est appuyé à fond, est serrée par la butée (9) dans un creux (4) du bras de pédale (2).

2. Pédale d'accélérateur selon la revendication 1, **caractérisée en ce que** la pièce d'appui (5, 13) a un poussoir (7) précontraint par un élément à ressort (6).

3. Pédale d'accélérateur selon la revendication 2, **caractérisée en ce que** l'élément à ressort (6) est un ressort à boudin.

4. Pédale d'accélérateur selon au moins l'une des revendications précédentes, **caractérisée en ce que** la pièce d'appui (17) se présente sous forme de bloc réalisé en gomme élastique.

5. Pédale d'accélérateur selon au moins l'une des revendications précédentes, **caractérisée en ce que** la pièce d'appui (17) a une coiffe de renfort (20) dans sa partie en regard de la butée (9).

6. Pédale d'accélérateur selon au moins l'une des revendications précédentes, **caractérisée en ce que** la pièce d'appui (5) est conçue pour actionner un interrupteur électrique (11).

7. Pédale d'accélérateur selon au moins l'une des revendications précédentes, **caractérisée en ce qu'**un interrupteur électrique (11) est agencé dans un creux (4), recevant la pièce d'appui (5), du bras de pédale (2).

8. Pédale d'accélérateur selon au moins l'une des revendications précédentes, **caractérisée en ce que** la position de la pièce d'appui (13) vis-à-vis du bras de pédale est réglable par rapport à la butée (9) notamment par un filetage.
